# EUROPEAN PATENT APPLICATION

(11) **EP 4 729 643 A1**
(43) Date of publication of application: **22.04.2026**
(21) Application number: 24861537.9
(22) Date of filing: 10.05.2024
(51) Int. Cl.: C22C 19/05, C22C 30/00, B22F 1/10, B22F 7/08

(54) **ACTIVATING AGENT, REPAIRING AGENT AND REPAIRING METHOD FOR BLADE DAMAGE DEFECTS FOR SHAPE AND PERFORMANCE RESTORATION**

(30) Priority: 05.09.2023 CN 202311140667
(71) Applicant: Dongfang Electric Corporation Dongfang Turbine Co., Ltd., Deyang, Sichuan 618000 (CN)
(72) Inventor: GONG, Xiufang, Deyang, Sichuan 618000 (CN); GAO, Zhenhuan, Deyang, Sichuan 618000 (CN); NIE, Liping, Deyang, Sichuan 618000 (CN); LI, Jinqi, Deyang, Sichuan 618000 (CN); FANG, Yu, Deyang, Sichuan 618000 (CN); GUAN, Yingbo, Deyang, Sichuan 618000 (CN); PEI, Yubing, Deyang, Sichuan 618000 (CN); WANG, Tianjian, Deyang, Sichuan 618000 (CN); LONG, Bin, Deyang, Sichuan 618000 (CN); LUO, Chao, Deyang, Sichuan 618000 (CN); SUN, Youbei, Deyang, Sichuan 618000 (CN)
(74) Representative: Santarelli
(86) International application number: PCT/CN2024/092212
(87) International publication number: WO 2025/050688

(57) **Abstract**

The present invention relates to the technical field of nickel-based high-temperature alloy restoration Disclosedare an activating agent, repairing agent and repairing method for blade damage defects for shape and performance restoration. **The** activating agent at least comprises the following elememts in percentage by mass:
Cr(16.1%-19.8%),Co(9.2%-12.8%),Al(1.2%~2.7%),Ti(9.6%-11.7%),Nb(5.6%~7.3%),Ru(4.6%-5.8%) and Mg(0.005%-0.01%). **The** repairing agent comprises an activating agent,a curingagent, and an adhesive which are umiformly mixed at a raio.Accordingto the present invention, the creep resistance and mechanical propertics of an alloy at high temperature can be effetively improved,and generation of a large amount of pores in a shape and performance restoration area caused by a capilary channel being solidified and closed in advance can be effectively prevented.

## Description

### Technical Field

The present invention relates to the technical field of nickel-based superalloy repair, in particular to an activator, repair agent, and repair method for morphological and property remodeling of blade damage defects.

### Background of the Invention

The nickel-based superalloy Inconel 738LC (IN738LC) is a γ'-phase precipitation-strengthened alloy. The nominal chemical composition of this equiaxed crystal alloy is Ni-16Cr-8.5Co-2.5W-3.5Al-3.5Ti-1.7Ta-1.7Mo-0.8Nb-0.09C-0.01B-0.05Zr (by weight percent). This alloy exhibits good microstructural stability and castability, with a service temperature below 900°C, making it suitable for manufacturing precision-cast blades for aero-engines and gas turbines. During the service process, turbine blades are inevitably subjected to morphological and property damage of the blades due to prolonged exposure to high-temperature gas corrosion, erosion, impact, and thermal fatigue. Employing an effective repair process to restore damaged areas can significantly extend the service life of the blades and reduce operational costs.

For Inconel738LC nickel-based superalloy blades with high Al and Ti contents, the base material is extremely prone to cracking during conventional fusion welding repair. In the field of nickel-based superalloy repair, powder metallurgy technology is particularly suitable for the repair and remanufacturing of cast superalloys with high aluminum-titanium contents. Based on the principle of isothermal solidification, this technology can effectively avoid the generation of hot cracks in the repair area and has many advantages, such as low cost and high efficiency. The repair material used is a mixture of a low-melting-point activator that acts as a brazing agent and a high-melting-point curing agent that acts as a filler. A binder is added and modulated into a paste to be coated on the surface of the workpiece, and then metallurgical sintering is carried out in a vacuum furnace to achieve the morphological and property remodeling of the damaged area.

Patents CN114669820A, CN114632991A, and CN114669956A respectively report several powder metallurgy repair materials for IN738 alloy. The highest room-temperature tensile strength of the repaired joint is 723MPa. To ensure that the aforementioned solder can be completely liquefied at a temperature lower than the initial melting point of the base material, the melting point of the solder is suppressed by introducing high concentrations of B (CN114669820A), Zr (CN114669956A), and Hf (CN114632991A). Although the processability of the solder is guaranteed, it also leads to large differences in elemental composition and microstructure between the solder and the base material. The obtained morphological and property remodeling area will generate more boride brittle phases and low-melting-point eutectic phases rich in B, Zr, and Hf. This will cause: 1) These low-melting-point harmful phases will melt under the solution heat treatment (about 1,130°C) of the IN738LC nickel-based superalloy blades. To prevent the morphological and property remodeling area from remelting during solution heat treatment, the solution heat treatment temperature needs to be reduced, which will cause the blade substrate to not reach the best restoration heat treatment effect, resulting in a decrease in the mechanical properties of the substrate; 2) Borides and eutectic phases rich in B, Zr, Hf, etc. are brittle phases, which are difficult to eliminate through heat treatment. Large pieces of precipitation connecting into a sheet will cause a serious decline in the high-temperature mechanical properties of the morphological and property remodeling area. Therefore, it cannot be used for the repair of blades under high-stress working conditions, limiting its application range to a certain extent; 3) During the service process of the blades repaired with the B-rich repair material, B in the morphological and property remodeling area will diffuse to the coating, leading to the premature failure of the blade coating.

### Summary of the Invention

The objective of the present invention is to provide an activator, a repair agent, and a repair method for morphological and property remodeling of blade damage defects, addressing the aforementioned problems in the prior art. The provided solution effectively enhances the alloy's resistance to creep and its mechanical properties at elevated temperatures, and can effectively prevent the premature solidification and closure of capillary channels, which would otherwise lead to the formation of excessive porosity in the morphological and property remodeling area.

The technical solution adopted by the present invention is as follows: An activator for morphological and property remodeling of blade damage defects, applicable to nickel-based superalloy blades, wherein the preparation of the activator comprises elements in at least the following percentages by mass:
Cr (16.1%-19.8%), Co (9.2%-12.8%), Al (1.2%-2.7%), Ti (9.6%-11.7%), Nb (5.6%-7.3%), Ru (4.6%-5.8%), Mg (0.005%-0.01%); balance Ni and/or incidental impurities.

Furthermore, the activator is prepared by the rotating electrode method.

Furthermore, the melting temperature range of the activator is 1,131°C to 1,160°C.

Furthermore, the particle size of the activator is 23µm to 30µm.

A repair agent for morphological and property remodeling of blade damage defects, comprising a curing agent, a binder, and the activator according to any one of claims 1 to 4, wherein the activator, the curing agent, and the binder are uniformly mixed in a predetermined ratio.

Furthermore, the activator, the curing agent, and the binder are mixed in a mass ratio of 3:6:1; the curing agent is de-titanium GTD111 commercial customized alloy powder 49; the binder is NIGROBRAZS-BINDR type commercial binder.

A repair method for morphological and property remodeling of blade damage defects, comprising the following steps:
S1: Preparation of repair agent;
S2: Modeling of blade defects;
Apply the repair agent obtained in step S1 to the damage defects of the nickel-based superalloy blade;
S3: Morphological and property remodeling of blade;
The blade, having completed step S2, is insulated in a vacuum environment, followed by furnace cooling. After cooling, the blade undergoes a heat treatment and a shaping process to accomplish the morphological and property remodeling of the damage defects.

Furthermore, in Step S2, before applying the repair agent, it is necessary to perform Step S21 on the damaged area: cleaning.

S21: Cleaning; grind and remove the oxide layer at the damage defects, then place the damage defects in an alcohol or acetone solution for ultrasonic cleaning, and dry them at a low temperature after cleaning.

Furthermore, in step S3, the vacuum degree of the vacuum environment is better than 1×10⁻³ Pa;

Furthermore, in step S3, the insulation temperature is 1,190°C to 1,220°C, and the insulation time is 45 minutes to 75 minutes.

In summary, by virtue of the aforementioned technical solutions, the present invention offers the following beneficial effects:
1. The activator provided by the present invention does not add melting-point depressants such as B, Zr, and Hf. Instead, it realizes the melting-point inhibition effect on the activator material by regulating the proportion of essential alloying elements in the nickel-based superalloy. This effectively avoids the formation of boride brittle phases and low-melting-point eutectic phases rich in B, Zr, and Hf, and can significantly improve the high-temperature mechanical properties of the morphological and property remodeling area of the IN738LC alloy blade.
2. The repair agent provided by the present invention is a clever combination of the activator and the selected curing agent. The content of solid-solution strengthening elements and γ' phase in the morphological and property remodeling area obtained is close to that of the base material. This will make the microstructure of the morphological and property remodeling area basically the same as that of the base material, and can significantly improve the high-temperature mechanical properties of the morphological and property remodeling area;
3. The activator provided by the present invention discloses Ru, which is used to reduce the segregation concentration of TCP-phase-forming elements such as Co, Cr, Ti, and Nb at the γ/γ' two-phase interface, effectively suppressing the precipitation behavior of TOP, and significantly improving the microstructural stability of the metallurgical bonding area; moreover, Ru has a similar effect to the W element. The Ru element with a large atomic radius is mainly dissolved in the substrate γ phase, which can significantly improve the high-temperature creep resistance of the alloy;
4. The activator powder provided by the present invention has a nearly equal-diameter size, which can achieve nearly isothermal and isochronous melting during the heat-preservation stage, is beneficial to the filling of the liquid phase in the voids between the curing agent powder and the base-material interface and between the curing agent powders, and can effectively avoid the premature solidification and closure of capillary channels, which would otherwise lead to the formation of excessive porosity in the morphological and property remodeling area.

### Brief Description of the Drawings

The present invention will be described in combination with embodiments and accompanying drawings, wherein:
Fig. 1 shows the DSC curve of the activator disclosed by the present invention;
Fig. 2 shows the microscopic morphology of the activator disclosed by the present invention;
Fig. 3 shows the macroscopic texture morphology of the IN738LC superalloy after morphological and property remodeling disclosed by the present invention;
Fig. 4 shows the microscopic texture morphology of the IN738LC superalloy after morphological and property remodeling disclosed by the present invention.

### Detailed Description of Embodiments

All of the features disclosed in the Description, or all of the steps of any method or process so disclosed, may be combined in any way, except combinations where such features and/or steps are mutually exclusive.

Any feature disclosed in the Description can be replaced with other equivalent or similar features, unless otherwise specified. That is, each feature is only an example of series of equivalent or similar features, unless otherwise specified.

### Embodiment 1

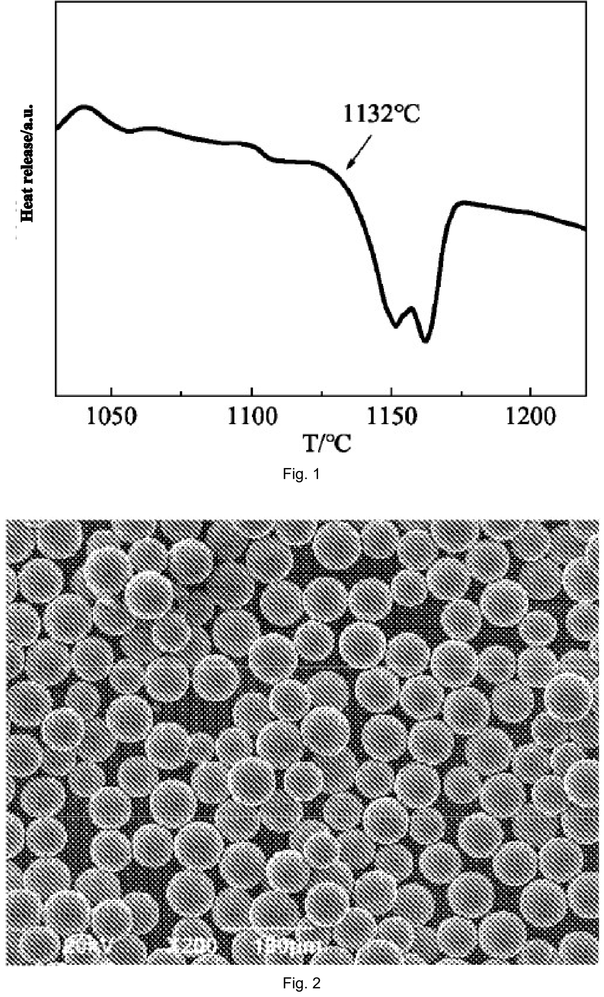

An activator for morphological and property remodeling of blade damage defects, as shown in Fig. 1 to Fig. 2, applicable to nickel-based superalloy blades, wherein the preparation of said activator comprises elements in at least the following percentages by mass:
Cr (16.1%-19.8%), Co (9.2%-12.8%), Al (1.2%-2.7%), Ti (9.6%-11.7%), Nb (5.6%-7.3%), Ru (4.6%-5.8%), Mg (0.005%-0.01%); balance Ni and/or incidental impurities.

In the present embodiment, the activator is used for the morphological and property remodeling of service defects of IN738LC nickel-based superalloy blades. Patents CN114669820A, CN114632991A, and CN114669956A also disclose several activators that can be used to repair IN738LC alloys. The difference between the activator of the present invention and them is that it does not use high-concentration B, Zr, and Hf as melting-point depressants, avoiding the formation of boride brittle phases and low-melting-point eutectic phases rich in B, Zr, and Hf in the morphological and property remodeling area. The structure and composition of the obtained morphological and property remodeling area are close to those of the base material, which can significantly improve the mechanical properties of the joint.

The elements used in the activator of the present embodiment include Cr, Co, Al, Ti, Nb, Ru, and Mg. The beneficial effects are as follows:
Cr is an important alloying element in the IN738LC alloy, with a content as high as 16wt%. Its main function is to improve the high-temperature oxidation resistance and hot corrosion resistance of the alloy. To make the oxidation resistance and hot corrosion resistance of the performance remodeling area obtained by the present invention at the same level as those of the base material, the content of Cr in the activator of the present invention is limited to the range of 15.1wt% to 19.8wt%.

Co can be infinitely miscible with the substrate element Ni to form a continuous substitutional solid solution, which plays a role in solid-solution strengthening of the substrate, can reduce the stacking-fault energy of the substrate, has a limited effect on the melting-point inhibition of the alloy, but can significantly reduce the solid-solution temperature of the γ' phase. The content of Co in the present invention is limited to the range of 9.2wt% to 12.8wt%.

Al is the main generating element of the γ' phase. To a certain extent, the high-temperature creep resistance of the morphological and property remodeling area is proportional to the number of γ' phases per unit volume. However, a large amount of addition will cause the melting point of the activator to rise sharply. Therefore, the content of Al in the present invention is limited to the range of 1.2wt% to 2.7wt%. It should be emphasized that this does not mean that the γ' phase content in the finally obtained morphological and property remodeling area will be lower than that of the IN738LC alloy base material. It should be emphasized that the activator of the present invention comprises high-concentration Ti and Nb elements, which will enter the γ' phase to replace a part of Al, thereby increasing the volume percentage of the γ' phase.

In the IN738LC alloy, both Ti and Nb are strengthening elements of the γ' phase, which can change the composition of the γ' phase, increase the anti-domain-boundary energy of the γ' phase, improve the high-temperature stability of the γ' phase, and correspondingly improve the strength and creep resistance of the morphological and property remodeling area. However, in the present invention, Ti and Nb are the main melting-point depression elements. The content of Ti is limited to the range of 9.6wt% to 11.7wt%, and the content of Nb is limited to the range of 5.6wt% to 7.3wt%. They cooperate with other alloying elements to inhibit the alloy melting point within the process range. It should be emphasized that excessive Ti and Nb in the activator of the present invention can be balanced by the GTD111-type curing agent powder (without Ti and Ta) for element diffusion and de-titanization, so that the finally obtained morphological and property remodeling area will not generate harmful phases due to the enrichment of Ti and Nb.

Ru is a rare-earth element. The purpose of its addition is to improve the microstructural stability of the morphological and property remodeling area. Another effect of the present invention is to have a weak melting-point depression effect. At the same time, the Ru element with a large atomic radius is dissolved in the substrate γ phase, causing lattice expansion of the substrate, increasing the long-range elastic stress field, thus hindering dislocation movement and reducing the elastic stress field, which can significantly improve the high-temperature creep resistance of the alloy. The content of Ru in the present invention is limited to the range of 4.6wt% to 5.8wt%.

Mg is a micro-alloying element. A small amount of addition can balance and segregate at the grain boundaries, reduce the grain-boundary energy, improve and refine the morphology of grain-boundary carbides and other grain-boundary precipitates, combine with the harmful impurity element S to form a high-melting-point compound MgS, weaken the harmful effect of S, play a role in purifying the grain boundaries, improve the grain-boundary binding force, increase the grain-boundary strength, and can effectively improve the tensile plasticity and creep-rupture properties of the morphological and property remodeling area. The content of Mg in the present invention is limited to the range of 0.005wt% to 0.01wt%.

### Embodiment 2

Based on Embodiment 1, to further clearly elaborate and illustrate the technical solution of the present invention, the following non-restrictive implementations are provided. Table 1 shows the implementations of the activator and the control examples. The following element content data are all mass-percentage data.

**Table 1 Implementations of the activator and the control examples**

| | Implementation | | | |
|---|---|---|---|---|
| | 1 | 2 | 3 | 4 |
| Ni | Bal. | Bal. | Bal. | Bal. |
| Cr | 19.8 | 17.3 | 18.8 | 16.1 |
| Co | 9.2 | 11.3 | 12.8 | 10.8 |
| Al | 2.7 | 2.5 | 1.2 | 1.9 |
| W | \ | \ | \ | \ |
| Ru | 4.6 | 5.8 | 4.9 | 5.3 |
| Nb | 6.5 | 7.3 | 5.6 | 5.8 |
| Ti | 11.7 | 10.7 | 9.6 | 10.5 |
| Ta | \ | \ | \ | \ |
| Mo | \ | \ | \ | \ |
| Zr | \ | \ | \ | \ |
| Hf | \ | \ | \ | \ |
| B | \ | \ | \ | \ |
| Mg | 0.005 | 0.006 | 0.01 | 0.008 |
| Melting point | 1132°C | 1150°C | 1160°C | 1136°C |

The advantages of Implementations 1-4 in the present embodiment are as follows:
1. The activator provided by the present invention does not use high-concentration B, Zr, and Hf as melting-point depressants, but realizes the melting-point inhibition effect on the activator material by regulating the proportion of essential alloying elements in the nickel-based superalloy. Therefore, it avoids the formation of boride brittle phases and low-melting-point eutectic phases rich in B, Zr, and Hf during the thermal insulation and metallurgy process, which will significantly improve the high-temperature mechanical properties of the morphological and property remodeling area of the INT38LC alloy blade.
2. The composition design of the activator provided by the present invention is based on the high-alloying theory. Therefore, it comprises high-concentration elements such as Cr, Co, Ti, and Nb. Although the GTD111-type curing agent for de-titanization is skillfully matched to make the element concentration of the entire morphological and property remodeling area tend to be balanced, the microstructural stability is low during the metallurgical bonding process, and the TCP phase has a high precipitation tendency at high temperatures. Therefore, a certain amount of rare-earth element Ru is introduced into the activator to reduce the segregation concentration of TCP-phase-forming elements such as Co, Cr, Ti, and Nb at the γ/γ' two-phase interface, effectively inhibiting the precipitation behavior of TCP, which will significantly improve the structural stability of the morphological and property remodeling area. At the same time, the Ru element with a large atomic radius is dissolved in the substrate γ phase, causing lattice expansion of the substrate, increasing the long-range elastic stress field, thus hindering dislocation movement and reducing the elastic stress field, which can significantly improve the high-temperature creep resistance of the alloy.

A feasible implementation is that the activator can be prepared by the rotating-electrode method, which is known to those skilled in the art. The specific process will not be detailed in the Description. A feasible implementation is that the melting temperature range of the activator is 1,131°C to 1,160°C.

As shown in Fig. 1, it is the DSC curve of the activator disclosed in Implementation 1 of the present embodiment.

A feasible implementation is that, as shown in Fig. 2, it is the microscopic morphology of the activator disclosed in Implementation 1 of the present embodiment. The particle size of the activator is 23µm to 30µm, and its size is nearly equidiameter. It can achieve near-isothermal and isochronal melting during the insulation stage, which is beneficial to the liquid-phase filling of the gaps between the curing agent powder and the base-material interface and between the curing agent powders, and can effectively avoid the premature solidification and closure of capillary channels, which would otherwise lead to the formation of excessive porosity in the morphological and property remodeling area.

The activator disclosed in the present embodiment has a wide applicability. When it is matched with the GTD111 commercial customized alloy powder to remodel the damage defects of the IN738LC alloy blade, the content of solid-solution strengthening elements and the amount of γ' phase in the obtained morphological and property remodeling area are close to those of the base material. This will make the microstructure of the obtained morphological and property remodeling area basically the same as that of the base material, and can significantly improve the high-temperature mechanical properties of the morphological and property remodeling area. Multiple parts and multiple blades can be remodeled at one time, with high remodeling efficiency and low cost, and it has high industrial application value.

### Embodiment 3

A repair agent for the morphological and property remodeling of blade damage defects comprises a curing agent, a binder, and the activator according to Implementation 1 of Embodiment 2. The activator, the curing agent, and the binder are mixed evenly in proportion.

Specifically, the activator powder according to Implementation 1, the curing agent, and the binder are mixed evenly in a mass ratio of 3:6:1 to form a mixed paste. The curing agent is a de-titanized GTD111 commercial customized alloy powder with the composition: C (0.1wt%), Cr (14.0wt%), Co (9.5wt%), Mo (1.6wt%), W (3.8wt%), Ta (2.8wt%), Al (3.0wt%), Zr (0.02wt%), B (0.012wt%), and the particle size is 75µm-150µm. The binder is a commercial-grade NICR0BRAZS-BINDR-type binder. It should be noted that the paste-like repair agent makes the repair agent viscous, reduces its fluidity, and makes the repair agent stable when smeared and filled at the remodeling position, avoiding the repair agent from leaving the remodeling position before entering the heating and melting stage. Moreover, the viscous repair agent is more convenient to fill the remodeling area. particularly, the viscous repair agent has a certain fluidity. When the repair agent fills the remodeling position, the repair agent can change its shape according to the size of the filling position due to its fluidity, meeting the filling requirements of the irregular remodeling area. And under the action of its own fluidity, it can be completely filled, reducing the defective voids in the remodeling area.

In the present embodiment, the repair agent is a clever combination of the activator and the selected curing agent. The content of solid-solution strengthening elements and the γ' phase in the obtained morphological and property remodeling area are close to those of the base material. This will make the microstructure of the obtained morphological and property remodeling area basically the same as that of the base material, and can significantly improve the high-temperature mechanical properties of the morphological and property remodeling area.

### Embodiment 4

A repair method for morphological and property remodeling of blade damage defects, comprising the following steps:
S1: Preparation of repair agent according to Embodiment 3.
S2: Modeling of blade defects; the damage defects of the IN738LC alloy blade need to be cleaned before applying the repair agent, specifically as follows:
   S21: Use a hard-alloy steel drill bit to remove the surface oxide layer of the IN738LC alloy blade defects. The defect size is less than 40mm in length × 40mm in width × 5mm in height. After grinding, place it in an alcohol or acetone solution for ultrasonic cleaning for 60 minutes, and take it out and dry it for later use.
   S22: Apply the repair agent obtained in step S1 to the damage defects of the IN738LC alloy blade.
S3: Morphological and property remodeling of blade;
The blade, having completed step S2, is maintained in a vacuum environment with a vacuum level superior to 1×10⁻³ Pa. The maintenance process is carried out at a temperature of 121°C for a duration of 60 minutes, wherein the vacuum environment can be provided by a vacuum furnace. Upon completion of the maintenance, the blade is furnace-cooled. After cooling, the blade undergoes a property recovery heat treatment and shaping to complete the morphological and property remodeling of the damage defects.

Perform a tensile test on the morphological and property remodeling area and the blade base material, and the test results are shown in Table 2.

**Table 2 Tensile properties of the morphological and property remodeling area and the base material**

| Test area | Test temperature | Rp0.2 (MPa) | Rm (MPa) | A (%) |
|---|---|---|---|---|
| Morphological and property remodeling area | Room temperature | 818 | 864 | 4.3 |
| | 900°C | 479 | 543 | 4.9 |
| Base material | Room temperature | 878 | 989 | 4.5 |
| | 900°C | 518 | 570 | 16.1 |

Consequently, by utilizing the activator described in implementation 1 of Embodiment 2, in combination with the curing agent and binder, to remodel the blade damage defects in an IN738LC alloy blade, the tensile strength of the resulting morphological and property remodeling area at room temperature reaches 864 MPa, achieving 87% of the strength of the base material.

The data selected from the following control examples are provided in detail as follows:

### Control example 1

Patent CN114669820A discloses a repair agent and a remodeling process for superalloy blades. The embodiments employ a composition comprising:
Ni-8wt.%Cr-3wt. %Co-2wt. %Al-2wt. %Ti-0.5wt.9W-0.5wt.%Mo-0.5wt. %Ta-0.5wt. %Nb-2.2 wt. %B and powder B with a composition of Ni-25at. %Cr-20at. %Co-20at. %Al-5at. %W-5at. %Mo-5at. %Ta-2at. %Nb-5at. % Ti is mixed at a mass ratio of 0.3:1 and then used to remodel the IN738LC superalloy blade. The tensile property of the remodeled area at room temperature is 723 MPa, which can only reach 70% of the strength of the blade base material.

### Control example 2

Patent CN114632991A discloses a repair process for gas turbine blades based on powder metallurgy. The embodiments employ a composition comprising:
Ni-6wt.%Cr-3wt.%Co-1wt.%Al-1wt.%Ti-0.5wt.%W-0.5wt.%Mo-0.5wt.%Ta-0.5wt.%Nb-25wt.% Hf and a multi-principal element alloy metal powder with a composition of Ni-20at. %Cr-20at.%Co-20at.%Al-5at.%W-5at.%Mo-5at.%Ta-2at.%Nb-5at.%Ti are mixed in a mass ratio of 0.1:1 to remodel an IN738LC alloy blade. The tensile strength of the remodeled area at room temperature is 683 MPa, achieving only 65% of the strength of the base material.

### Control example 3

Patent CN114669956A discloses a powder metallurgy repair method for repairing the defects of superalloy blades. In the embodiment, a powder with a composition of
Ni-12wt.%Cr-5wt.%Co-2wt.%Al-3wt.%Ti-2wt.%W-2wt.%Mo-10wt.%Zr and powder B with a composition of Ni-18at. %Cr-18at.%Co-6at.%Al-2at.%W-2at.%Mo-2at.%Ti and a powder with a composition of Ni-balance (or another specified composition, as the original text seems incomplete) are mixed in a mass ratio of 0.15:1 to remodel an IN738LC alloy blade. The tensile strength of the remodeled area at room temperature is 692 MPa, achieving only 65% of the strength of the base material.

In summary, after remodeling the IN738LC superalloy blade, the tensile properties of the remodeled areas in control examples 1 to 3 at room temperature are all weaker than those of the scheme disclosed in the present embodiment. Therefore, the activator provided by the present invention does not use the addition of high-depth B, Zr, and Hf as melting-point depressants. Instead, it realizes the melting-point inhibition effect on the activator material by regulating the proportion of the necessary alloying elements of the nickel-based superalloy. Thus, it avoids the formation of boride brittle phases and low-melting-point eutectic phases rich in B, Zr, and Hf during the holding metallurgy process, which will significantly improve the high-temperature mechanical properties of the morphological and property remodeling area of the IN738LC superalloy blade.

Creep performance tests are carried out on the morphological and property remodeling area and the blade base material, and the test results are shown in Table 3.

**Table 3 Creep performance of the morphological and property remodeling area and the base material**

| Test area | Test temperature (°C) | Test stress (MPa) | Fracture time (h) |
|---|---|---|---|
| Morphological and property remodeling area | 870 | 250 | 99.5 |
| | 870 | 300 | 38.1 |
| Base material | 870 | 250 | 203.7 |
| | 870 | 300 | 48.2 |

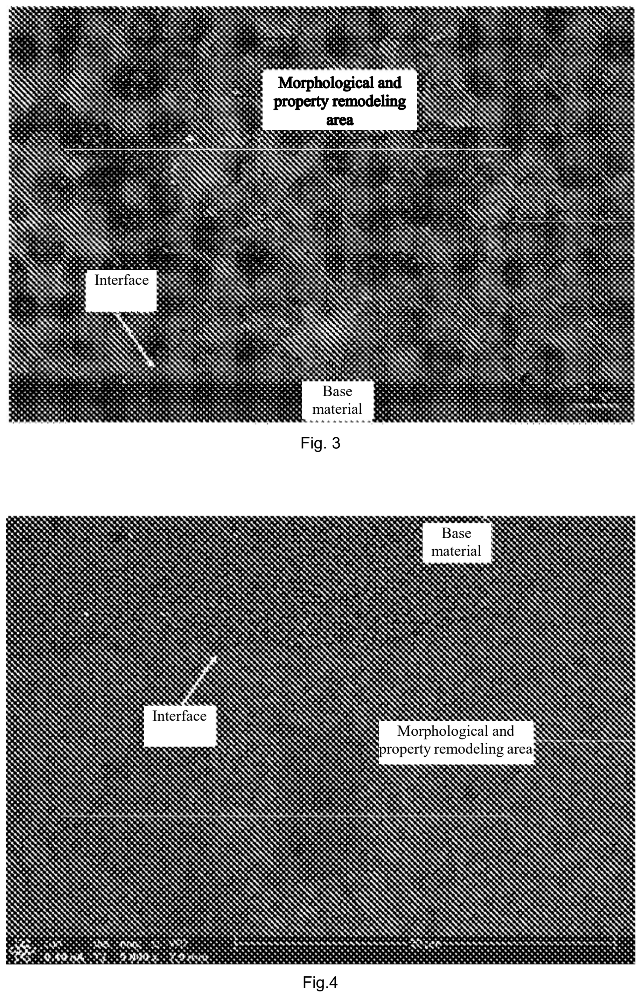

The microstructure of the morphological and property remodeling area is analyzed. The macroscopic microstructure morphology is shown in Figure 3. The structure of the morphological and property remodeling area is dense, the interface connection is good, and no large-scale heterogeneous weakening phases are found. The microscopic microstructure morphology is shown in Figure 4. The proportion of the γ' strengthening phase in the morphological and property remodeling area is high and the morphology is excellent. The average compositions of the main elements in the morphological and property remodeling area and the base material are analyzed by a field-emission scanning electron microscope EDS energy spectrum. The results are shown in Table 4. The elements for forming the γ' phase in the morphological and property remodeling area Al + Ti + Ta + Nb = 10.7 (wt%), the solution-strengthening elements of the γ phase in the morphological and property remodeling area W + Mo + Ru (wt%) 5.1 (wt%), the elements for forming the γ' phase in the base material Al + Ti + Ta + Nb (wt%) ≈ 9.7 (wt%), and the solution-strengthening elements of the γ phase in the base material W + Mo (wt%) ≈ 4.2 (wt%). The contents of the main mechanical-property strengthening elements in the morphological and property remodeling area are very close to or slightly higher than those in the blade base material.

**Table 4 Comparison of the average compositions of the main elements in the morphological and property remodeling area and the base material analyzed by EDS energy spectrum**

| Elements | Base material (wt%) | Morphological and property remodeling area (wt%) |
|---|---|---|
| Cr | 16.23 | 15.92 |
| Co | 8.53 | 9.38 |
| W | 2.49 | 2.52 |
| Al | 3.48 | 2.92 |
| Ti | 3.52 | 3.82 |
| Ta | 1.69 | 1.86 |
| Ru | / | 1.52 |
| Mo | 1.69 | 1.09 |
| Nb | 0.82 | 2.13 |
| Zr | 0.05 | 0.02 |
| Ni | Bal. | Bal. |

The present invention is not limited to the detailed description of the implementations mentioned above. The present invention expands to any new feature or any new combination disclosed in the Description, and steps in any new method or process or any new combination disclosed.

## Claims

1. An activator for morphological and property remodeling of blade damage defects, applied to IN738LC superalloy blades, wherein the preparation of the activator comprises elements in at least the following percentages by mass:
Cr (16.1%-19.8%), Co (9.2%-12.8%), Al (1.2%-2.7%), Ti (9.6%-11.7%), Nb (5.6%-7.3%), Ru (4.6%-5.8%), Mg (0.005%-0.01%); balance Ni and/or incidental impurities.

2. The activator according to claim 1, wherein its preparation comprises elements in at least the following percentages by weight:
Cr (19.8%), Co (9.2%), Al (2.7%), Ti (11.7%), Nb (6.5%), Ru (4.6%), Mg (0.005%); balance Ni and/or incidental impurities.

3. The activator according to claim 1, wherein the preparation of the activator comprises elements in at least the following percentages by mass:
Cr (17.3%), Go (11.3%), Al (2.5%), Ti (10.7%), Nb (7.3%), Ru (5.8%), Mg (0.006%); balance Ni and/or incidental impurities.

4. The activator according to claim 1, wherein the preparation of the activator comprises elements in at least the following percentages by mass:
Cr (18.8%), Co (12.8%), Al (1.2%), Ti (9.6%), Nb (5.6%), Ru (4.9%), Mg (0.01%); balance Ni and/or incidental impurities.

5. The activator according to claim 1, wherein the preparation of the activator comprises elements in at least the following percentages by mass:
Cr (16.1%), Co (10.8%), Al (1.9%), Ti (10.5%), Nb (5.8%), Ru (5.3%), Mg (0.008%); balance Ni and/or incidental impurities.

6. The activator according to claim 1, wherein the activator is prepared by a rotating electrode method.

7. The activator according to claim 1, wherein the melting temperature range of the activator is 1,131°C to 1,160°C.

8. The activator according to claim 1, wherein the particle size of the activator is 23µm to 30µm.

9. A repair agent for morphological and property remodeling of blade damage defects, comprising a curing agent, a binder, and the activator according to any one of claims 1 to 8, wherein the activator, the curing agent, and the binder are uniformly mixed in a predetermined ratio.

10. The repair agent according to claim 9, wherein the activator, the curing agent, and the binder are mixed in a mass ratio of 3:6:1; the curing agent is de-titanium GTD111 commercial customized alloy powder; the binder is NICR0BRAZS-BINDR type commercial binder.

11. A repair method for morphological and property remodeling of blade damage defects, wherein comprising the following steps:
S1: Preparation of repair agent according to any one of claims 9 to 10;
S2: Modeling of blade defects;
Apply the repair agent obtained in step S1 to the damage defects of the nickel-based superalloy blade;
S3: Morphological and property remodeling of blade;
The blade, having completed step S2, is insulated in a vacuum environment, followed by furnace cooling. After cooling, the blade undergoes a heat treatment and a shaping process to accomplish the morphological and property remodeling of the damage defects.

12. The repair method according to claim 11, wherein in step S2, step S21: cleaning, is performed on the damaged area before applying the repair agent.
S21: Cleaning; grind and remove the oxide layer at the damage defects, then place the damage defects in an alcohol or acetone solution for ultrasonic cleaning, and dry them at a low temperature after cleaning.

13. The repair method according to claim 11, wherein in step S3, the vacuum degree of the vacuum
environment is better than 1×10⁻³ Pa.

14. The repair method according to claim 11, wherein in step S3, the insulation temperature is 1,190°C
to 1,220°C, and the insulation time is 45 minutes to 75 minutes.
